# EUROPÄISCHE PATENTSCHRIFT

(11) **EP 1 029 399 B1**
(45) Veröffentlichungstag und Bekanntmachung des Hinweises auf die Patenterteilung: **14.01.2004**
(21) Anmeldenummer: 98956802.7
(22) Anmeldetag: 30.09.1998
(51) Int. Cl.: H04B 7/08

(54) **VERFAHREN ZUR AUSWAHL EINES VON MEHREREN EMPFÄNGERN IN EINER DIVERSITY-EMPFANGSANLAGE**
METHOD FOR SELECTING A RECEIVER AMONG A PLURALITY OF RECEIVERS IN A DIVERSITY RECEPTION INSTALLATION
PROCEDE POUR SELECTIONNER UN RECEPTEUR PARMI UNE PLURALITE DE RECEPTEURS DANS UNE INSTALLATION DE RECEPTION EN DIVERSITE

(30) Priorität: 30.09.1997 DE 19743123
(43) Veröffentlichungstag der Anmeldung: 23.08.2000
(73) Patentinhaber: XSYS Interactive Research GmbH, 78050 Villingen-Schwenningen (DE)
(72) Erfinder: LINK, Hermann, D-78166 Donaueschingen (DE); SCHRADI, Stefan, D-78048 Villingen-Schwenningen (DE)
(74) Vertreter: Westphal, Klaus, Dipl.-Ing.
(86) Internationale Anmeldenummer: PCT/DE1998/002906
(87) Internationale Veröffentlichungsnummer: WO 1999/017464

(56) Entgegenhaltungen:
- WO-A-97/09792
- US-A- 4 255 816
- US-A- 4 953 197
- US-A- 5 535 440

## Beschreibung

Die Erfindung betrifft ein Verfahren zur Auswahl eines von mehreren Empfängern in einer Diversity-Empfangsanlage sowie eine Schaltungsanordnung zur Durchführung des Verfahrens.

Diversity-Empfangsanlagen mit mehreren Empfängern werden beispielsweise in Fahrzeugen eingesetzt. Als Empfänger kommen z.B. Audio- und Fernsehempfänger infrage.

Der Empfang und die Wiedergabe von Fernsehbildern in ortsfesten Empfangsstationen bereitet keine Schwierigkeiten, weil die Empfangsverhältnisse weitgehend konstant bleiben. Dagegen können die Empfangsverhältnisse für eine mobile Empfangsstation je nach Beschaffenheit des Geländes erheblich schwanken. Befindet sich die mobile Empfangsstation z.B. in einer bergigen Landschaft, können Echos den Empfang erheblich stören; im Funkschatten von Bergen oder Hügeln kann die Funkverbindung sogar vollständig zusammenbrechen, so daß anstelle eines Fernsehbildes nur noch Rauschen auf dem Bildschirm zu sehen ist.

Inzwischen werden Kraftfahrzeuge wie z.B. PKW und Reisebusse, aber auch Eisenbahnfahrzeuge mit Fernsehempfängern und Bildschirmen ausgerüstet, um einerseits Nachrichten, beispielsweise über Videotext übermittelte Verkehrsmeldungen, anzeigen oder andererseits die Reisenden mit Fernsehprogrammen unterhalten zu können. Aufgrund der infolge des gerade befahrenen Geländes unter Umständen erheblich schwankenden Empfangsverhältnisse in einer sich bewegenden Empfangsstation werden die Augen der reisenden Fernsehzuschauer in unangenehmer Weise stark beansprucht, weil die Bildqualität in erheblichem Maß schwanken kann. Durchfährt das Fahrzeug z.B. einen Funkschatten, so sieht der Betrachter nur noch Rauschen auf dem Bildschirm. Das Betrachten eines Fernsehprogramms mit derartigen Störungen führt eher zur Ermüdung der Zuschauer als daß es deren Unterhaltung dient.

Es ist bekannt, den Empfang von Funksignalen in mobilen Empfangsstationen durch Mehrwegeempfang, im englischen als diversity bezeichnet, zu verbessern. Unter Antennendiversity versteht man, daß ein Empfänger an eine von mehreren meist räumlich getrennten Antennen anschließbar ist, während mit Frequenzdiversity ein System aus mehreren Empfängern bezeichnet wird, die auf unterschiedlichen Freqzuenzen gleiche Signale oder dieselben Programme empfangen. Die bei Antennendiversity von den Antennen und bei Frequenzdiversity von den Empfängern gelieferten Signale werden bezüglich ihrer Qualität geprüft, um das Signal der besten Qualität zu finden, weiterzuleiten und weiterzuverabeiten.

Aus der US 4,953,197 A sind ein Verfahren und eine Schaltungsanordnung zur Auswahl eines von mehreren Empfängern bekannt, wobei die Pegel der Regelsignale der automatischen Verstärkungsregelung miteinander verglichen werden und derjenige Empfänger, dessen Regelsignal den kleinsten Pegel hat, ausgewählt wird. Ein Basisbandprozessor vergleicht die Regelsignale der einzelnen Empfänger und steuert entsprechend einen Umschalter, so daß an dessen Ausgang das Ausgangssignal des ausgewählten Empfängers anliegt, dessen Regelsignal den kleinsten Pegel hat.

Aus der WO 97/09792 A ist ein Empfänger bekannt, an den eine von mehreren Antennen anschaltbar ist. Wenn der Rauschpegel einen vorgegebenen Schwellwert übersteigt, wird so lange auf eine andere Antenne umgeschaltet, bis eine Antenne gefunden ist, deren Rauschpegel unter dem vorgegebenen Schwellwert liegt.

In der US 5,535,440 A ist ein Empfangssystem mit zwei Empfängern bekannt, die mit einer automatischen Verstärkungsregelung ausgerüstet sind. Von den beiden Empfängern wird derjenige ausgewählt, dessen Regelsignal der automatischen Verstärkungsregelung den größeren Pegel aufweist oder einen vorgebbaren Schwellwert übersteigt. Um unnötige Umschaltvorgänge zu vermeiden, ist in die Entscheidungslogik zur Auswahl eines der beiden Empfänger eine Hysterese eingebaut.

Es ist daher Aufgabe der Erfindung, für eine Diversity-Empfangsanlage mit mehreren Empfängern ein Verfahren zur Auswahl des am besten empfangenden Empfängers anzugeben.

Die Erfindung löst diese Aufgabe dadurch, dass die Signalübertragung blockweise erfolgt, daß nur dann auf einen anderen Empfänger umgeschaltet wird, wenn der Pegel seines Regelsignals um einen vorgebbaren Mindestwert unter dem Pegel der anderen Regelsignale liegt, und dass die Umschaltung von einem auf den anderen Empfänger zwischen zwei Blöcken erfolgt.

Die Erfindung geht von der Erkenntnis aus, daß der Pegel des Regelsignals der automatischen Verstãrkungsregelung eines Empfängers, z. B. eines Fernsehempfängers, ein Maß für den Empfangspegel darstellt. Erreicht der Pegel des Regelsignals seinen Höchstwert, so ist der Empfangspegel zu gering, dagegen liegt der Empfangspegel im optimalen Bereich, wenn der Pegel des Regelsignals seinen Minimalwert annimmt.

Es zeigen
- Fig. 1: eine Diversity - Empfangsanlage
- Fig. 2: ein erstes Ausführungsbeispiel der Erfindung.

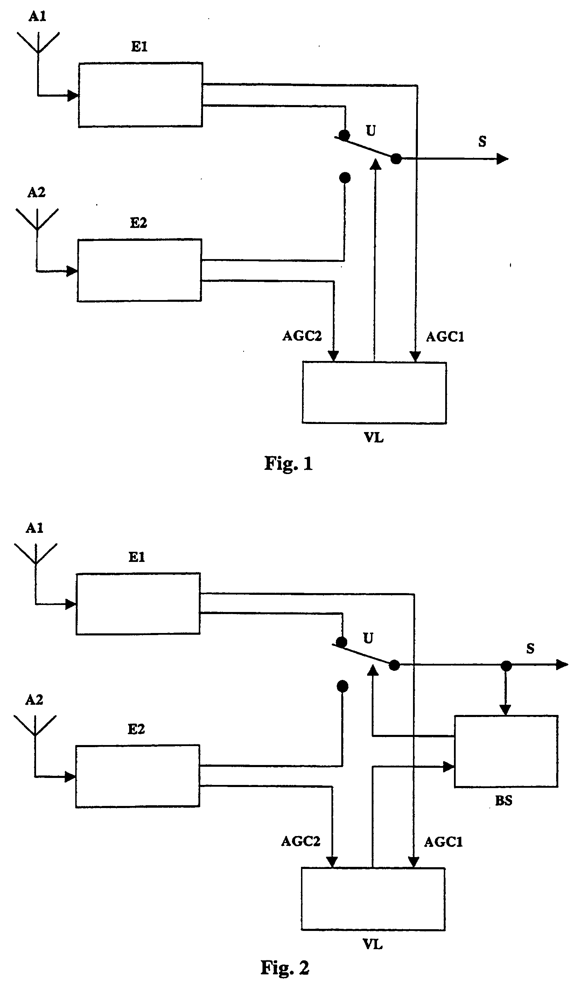

Figur 1 zeigt eine bekannte Diversity - Empfangsanlage.

Zwei Empfänger E1 und E2, z.B. Fernsehempfänger, empfangen mit je einer Antenne A1 und A2 dasselbe Programm. Im Vergleicher VL werden die beiden Regelsignale AGC1 und AGC2 der beiden Empfänger E1 und E2 miteinander verglichen. Der Vergleicher VL wählt mittels des steuerbaren Umschalters U den Ausgang desjenigen Empfängers aus, dessen Regelsignal den kleineren Pegel hat. Es werden daher stets die Ausgangssignale S des Empfängers mit dem kleineren Pegel des Regelsignals zur Weiterverarbeitung weitergeleitet. Es können auch mehr als zwei Empfänger vorgesehen sein.

Es wird nun das in der Figur 2 gezeigte erste Ausführungsbeispiel der Erfindung beschrieben und erläutert.

Das erste Ausführungsbeispiel unterscheidet sich vom Stand der Technik dadurch, daß der Ausgang des Vergleichers VL nicht mit dem Steuereingang des steuerbaren Umschalters U, sondern mit dem ersten Steuereingang eines Blocksynchronisators BS verbunden ist. Dem zweiten Steuereingang des Blocksynchronisators BS wird das Ausgangssignal S eines der beiden Empfänger E1 oder E2 zugeführt. Der Steuerausgang des Blocksynchronisators BS ist mit dem Steuereingang des steuerbaren Umschalters U verbunden.

Die Erfindung ist bei blockweiser Übertragung von Signalen geeignet. Der Blocksynchronisator BS erhält vom Vergleicher VL ein Steuersignal zur Umschaltung auf den einen Empfänger, wenn der Pegel des Regelsignals des anderen Empfängers größer wird als der Pegel des Regelsignals des einen Empfängers. Der Blocksynchronisator BS führt jedoch eine Umschaltung auf einen anderen Empfänger nicht sofort, sondern nur am Ende bzw. Anfang eines Blockes aus. Mit anderen Worten ausgedrückt bedeutet dies, daß der Blocksynchronisator BS Umschaltungen mit der Blocksynchronisation durchführt. In einem Block werden keine Umschaltungen vorgenommen.

Die Erfindung ist besonders gut für eine Diversity-Empfangsanlage mit Fernsehempfängern geeignet. Die Umschaltung von einem auf den anderen Empfänger erfolgt mit der Zeilen- oder Bildsynchronisation.

Bei der Erfindung ist vorgesehen, nur dann auf einen anderen Empfänger umzuschalten, wenn sich der kleinste Pegel um einen vorgegebenen Mindestwert von den Pegeln der anderen Regelsignale unterscheidet. Durch diese Maßnahme, eine Hysterese vorzusehen, werden unnötige Umschaltvorgänge vermieden.

Ein besonderer Vorteil der Erfindung ist darin zu sehen, daß das Regelsignal ohnehin vorhanden ist und die Erfindung mit nur geringem Aufwand -nur ein Vergleicher und ein steuerbarer Umschalter sind erforderlich- realisierbar ist.

Die Erfindung ist nicht auf Fernsehempfänger beschränkt. Sie ist für Empfänger aller Art für Diversity-Empfangsanlagen geeignet. Insbesondere ist die Erfindung für mobile Diversity-Empfangsanlagen geeignet, wie sie z.B. in Fahrzeugen eingebaut sind. Es kann sich hierbei um eine Audio- und/oder Fernsehempfangsanlage handeln. Denkbar ist auch eine zukünftige Anwendung bei digitaler Audioübertragung.

## Patentansprüche

1. Verfahren zur Auswahl eines von mehreren Rundfunkempfängern (E1, E2) einer Diversity-Empfangsanlage, wobei die Pegel der Regelsignale (AGC1, AGC2) der automatischen Verstärkungsregelung der Rundfunkempfänger (E1, E2) miteinander verglichen werden und derjenige Rundfunkempfänger, dessen Regelsignal (AGC1, AGC2) den kleinsten Pegel hat, ausgewählt wird,
**dadurch gekennzeichnet, dass** die Signalübertragung blockweise erfolgt,
daß nur dann auf einen anderen Rundfunkempfänger umgeschaltet wird, wenn der Pegel seines Regelsignals um einen vorgebbaren Mindestwert unter dem Pegel der anderen Regelsignale liegt, und dass die Umschaltung von einem auf den anderen Rundfunkempfänger zwischen zwei Blöcken erfolgt.

2. Verfahren nach Anspruch 1,
**dadurch gekennzeichnet,**
**daß** es sich um eine mobile Diversity-Empfangsanlage handelt.

3. Verfahren nach Anspruch 1 oder 2,
**dadurch gekennzeichnet,**
als Empfänger Audio- und/oder Fernsehempfänger vorgesehen sind.

4. Verfahren nach einem der Ansprüche 1 bis 3,
**dadurch gekennzeichnet,**
**daß** in einer Diversity-Empfangsanlage mit Fernsehempfängern die Umschaltung von einem Fernsehempfänger auf einen anderen mit der Zeilen- oder Bildsynchronisation erfolgt.

5. Schaltungsanordnung zur Durchführung des Verfahrens nach einem der Ansprüche 1 bis 4,
**dadurch gekennzeichnet,**
**daß** die Ausgänge mehrerer Empfänger (E1, E2) für das Regelsignal (AGC1, AGC2) der automatischen Verstärkungsregelung mit den Eingängen des Vergleichers (VL) verbunden sind, dessen Ausgang mit dem ersten Steuereingang eines Blocksynchronisators (BS) verbunden ist, daß der Steuerausgang des Blocksynchronisators (BS) mit dem Steuereingang eines steuerbaren Umschalters (U) verbunden ist, daß die Signalausgänge der Empfänger (E1, E2) mit den Eingängen des steuerbaren Umschalters (U) verbunden sind, dessen Ausgang mit dem zweiten Steuereingang des Blocksynchronisators (BS) verbunden ist, und daß am Ausgang des steuerbaren Umschalters (U) das Ausgangssignal (S) des ausgewählten Empfängers abnehmbar ist, wobei die Signalübertragung blockweise durchführbar ist und nur dann auf einen anderen Empfänger umgeschaltet wird, wenn einerseits der Pegel seines Regelsignals um einen vorgebbaren Mindestwert unter dem Pegel der anderen Regelsignale liegt, und andererseits die Umschaltung von einem auf den anderen Empfänger zwischen zwei Blöcke gelegt wird.

6. Schaltungsanordunung nach Anspruch 5,
**dadurch gekennzeichnet,**
**daß** als Empfänger (E1, E2) Fernsehempfänger vorgesehen sind, und daß der Blocksynchronisator (BS) die Zeilen- oder Bildsynchronisation steuert.

## Claims

1. Method for selection of one of two or more broadcast radio receivers (E1, E2) in a diversity receiving system, with the levels of the control signals (AGC1, AGC2) for the automatic gain control of the broadcast radio receivers (E1, E2) being compared with one another and that broadcast radio receiver whose control signal (AGC1, AGC2) has the lowest level being selected,
**characterized in that** the signals are transmitted in blocks,
**in that** switching to the other broadcast radio receiver takes place only when the level of its control signal is below the level of the other control signals by a minimum value which can be predetermined, and **in that** the switching from one broadcast radio receiver to the other takes place between two blocks.

2. Method according to Claim 1,
**characterized**
**in that** this is a mobile diversity receiving system.

3. Method according to Claim 1 or 2,
**characterized**
**in that** the receiver is an audio and/or television receiver.

4. Method according to one of Claims 1 to 3,
**characterized**
**in that**, in a diversity receiving system with television receiver, the switching from one television receiver to another takes place with the line or frame synchronization.

5. Circuit arrangement for carrying out the method according to one of Claims 1 to 4,
**characterized**
**in that** the outputs of two or more receivers (E1, E2) for the control signal (AGC1, AGC2) for the automatic gain control are connected to the inputs of the comparator (VL) , whose output is connected to the first control input of a block synchronization device (BS) , in that the control output of the block synchronization device (BS) is connected to the control input of a controllable changeover switch (U), in that the signal outputs of the receivers (E1, E2) are connected to the inputs of the controllable changeover switch (U), whose output is connected to the second control input of the block synchronization device (BS), and in that the output signal (S) from the selected receiver can be tapped off at the output of the controllable changeover switch (U), in which case the signal transmission can be carried out in blocks and switching to the other receiver takes place only when, on the one hand, the level of its control signal is below the level of the other control signal by a minimum value which can be predetermined and, on the other hand, the switching from one receiver to the other takes place between two blocks.

6. Circuit arrangement according to Claim 5,
**characterized**
**in that** television receivers are provided as the receivers (E1, E2), and in that the block synchronization device (BS) controls the line or frame synchronization.

## Revendications

1. Procédé pour sélectionner un récepteur de radiodiffusion (E1, E2) parmi plusieurs d'une installation de réception par diversification (Diversity), dont les niveaux des signaux de régulation (AGC1, AGC2) de la commande de gain automatique des récepteurs de radiodiffusion (E1, E2) sont comparés les uns aux autres, et dont on celui des récepteurs de radiodiffusion dont le signal de régulation (AGC1, AGC2) présente le niveau le plus bas sélectionne,
**caractérisé en ce que**
les signaux sont transmis par blocs, l'on ne commute sur un autre récepteur de radiodiffusion que si le niveau de son signal de régulation se situe d'une valeur minimum prédéterminée en dessous du niveau des autres signaux de régulation, et la commutation d'un récepteur de radiodiffusion sur l'autre se fait entre deux blocs.

2. Procédé selon la revendication 1,
**caractérisé en ce qu'**
il s'agit d'une installation de réception Diversity mobile.

3. Procédé selon la revendication 1 ou 2,
**caractérisé en ce que**
les récepteurs sont des récepteurs audio et/ou de télévision.

4. Procédé selon l'une des revendications 1 à 3,
**caractérisé en ce que**
dans une installation de réception Diversity comprenant des récepteurs de télévision, la commutation d'un récepteur de télévision sur un autre se fait par la synchronisation de lignes ou d'images.

5. Ensemble de circuits pour la mise en oeuvre du procédé selon l'une des revendications 1 à 4,
**caractérisé en ce que**
les sorties de plusieurs récepteurs (E1, E2) pour le signal de régulation (AGC1, AGC2) de la commande de gain automatique sont reliées aux entrées du comparateur (VL), dont la sortie est reliée à la première entrée de commande d'un synchroniseur de blocs (BS), la sortie de commande du synchroniseur de blocs (BS) est reliée à l'entrée de commande d'un commutateur (U) asservi, les sorties de signal des récepteurs (E1, E2) sont reliées aux entrées du commutateur (U) asservi, dont la sortie est reliée à la deuxième entrée de commande du synchroniseur de blocs (BS), et le signal de sortie (S) du récepteur sélectionné est disponible à la sortie du commutateur (U) asservi, la transmission des signaux pouvant être réalisée par blocs et une commutation sur un autre récepteur n'étant effectuée d'une part que si le niveau de son signal de régulation se situe d'une valeur minimum prédéterminée en dessous du niveau des autres signaux de régulation, et d'autre part que si la commutation d'un récepteur sur un autre est placée entre deux blocs.

6. Ensemble de circuits selon la revendication 5,
**caractérisé en ce que**
les récepteurs (E1, E2) sont des récepteurs de télévision, et le synchroniseur de blocs (BS) commande la synchronisation de lignes ou d'images.
